# EUROPÄISCHE PATENTSCHRIFT

(11) **EP 1 699 630 B1**
(45) Veröffentlichungstag und Bekanntmachung des Hinweises auf die Patenterteilung: **14.07.2010**
(21) Anmeldenummer: 04803856.6
(22) Anmeldetag: 14.12.2004
(51) Int. Cl.: B32B 27/12, D06N 3/14, E04D 12/00

(54) **VERFAHREN ZUM HERSTELLEN EINER UNTERDECKBAHN FÜR DÄCHER**
Method for the production of a roof underlay
Procédé de production d'une membrane de sous-toiture

(30) Priorität: 18.12.2003 DE 10359957
(43) Veröffentlichungstag der Anmeldung: 13.09.2006
(73) Patentinhaber: EWALD DÖRKEN AG, 58313 Herdecke (DE)
(72) Erfinder: KLINGELHAGE, Norbert, 58300 Wetter (DE); LAUR, Rüdiger, 44225 Dortmund (DE); SCHRÖER, Jörn, 58313 Herdecke (DE)
(74) Vertreter: Gesthuysen, von Rohr & Eggert
(86) Internationale Anmeldenummer: PCT/EP2004/014233
(87) Internationale Veröffentlichungsnummer: WO 2005/058599

(56) Entgegenhaltungen:
- EP-A- 0 700 779
- WO-A-96/37668
- DE-A1- 4 428 304
- DE-A1- 10 133 822
- DE-A1- 19 504 017
- DE-A1- 19 642 253
- DE-A1- 19 725 451
- DE-A1- 19 908 465
- DE-U1- 29 801 953
- US-A1- 2003 077 964

## Beschreibung

Die Erfindung betrifft ein Verfahren zum Herstellen eines bahnförmigen, atmungsaktiven Verbundes aus einem Vlies aus Kunststoff und einer ganz oder überwiegend aus Polyurethan (PU) bestehenden Schicht für den Einsatz als Unterdeckbahn für Dächer und als Fassadenbahn. Die Erfindung umfaßt auch eine solche Bahn.

Es ist bereits ein Verfahren zum Herstellen eines bahnförmigen, atmungsaktiven zweischichtigen Verbundes aus PU auf einem Polyester-Vlies für den Einsatz als Unterdeckbahn für Dächer bekannt. Die Unterdeckbahn wird so unterhalb der Eindeckung eines Daches angeordnet, daß die PU-Folie nach außen und das Vlies nach innen weist. Die PU-Folie ist wind-, feststoff- und wasserdicht, aber wasserdampfdurchlässig. Das Vlies dient primär als Träger der PU-Folie und kann darüber hinaus in Zeiten eines hohen Wasserdampfanfalls die Funktion eines Speichers für den Wasserdampf übernehmen. Bei der Herstellung der Unterdeckbahn wird die PU-Schicht durch Extrudieren von PU oder als Dispersion auf das Vlies aufgebracht und mit dem Vlies stoffschlüssig sowie ohne Verbindungshilfsmittel verbunden. Polyester-Vliese sind relativ teuer, so daß die Herstellung einer Unterdeckbahn aus Polyester-Vlies mit einer PU-Beschichtung entsprechend hohe Kosten verursacht.

Ein Verfahren nach dem Oberbegriff des Anspruchs 1 wird in EP 0700799 A beschrieben.

Es besteht daher die Aufgabe, einen bahnförmigen, atmungsaktiven Verbund aus einem Vlies aus Kunststoff und einer ganz oder überwiegend aus PU bestehenden Schicht herzustellen, der sich für den Einsatz als Unterdeckbahn für Dächer eignet, nämlich feststoff-, wind- und wasserundurchlässig sowie wasserdampfdurchlässig und für die Verarbeitung als Unterdeckbahn ausreichend reißfest ist, und eine Senkung der Kosten gegenüber einem Verbund aus einem Polyester-Vlies und einer PU-Schicht zuläßt. Diese Aufgabe besteht auch für eine entsprechende Unterdeckbahn, die mit geringeren Kosten als bisher und ohne Beeinträchtigung der vorgenannten Eigenschaften herstellbar sein soll.

Diese Aufgabe wird durch die Merkmalskombination des Anspruchs 1 gelöst.

Wenn in dieser Weise ein PU-Produkt erwärmt und auf ein bahnförmiges PP-Vlies aufextrudiert und mit diesem verpreßt wird, entsteht eine Unterdeckbahn, die sich sehr wirtschaftlich herstellen läßt und die o. g. Eigenschaften aufweist. PP-Vliesmaterial hat nicht nur einen sehr deutlichen Kostenvorteil gegenüber den o. g. Vliesmaterialen - je-denfalls mit Bezug auf solche mit gleichwertigen Trägereigenschaften -, sondern weist auch eine gute Beständigkeit gegenüber Medien wie Alkalien auf, und es findet kein Kapillar-Transport von Wasser statt. Dadurch, daß weiterhin ein PU-Produkt zur Beschichtung des PP-Vlieses dient, bleiben sämtliche für die Funktion der Unterdeckbahn wichtigen Eigenschaften, wozu auch intrinsisch flammhemmende Eigenschaften gehören, erhalten, wobei sich das erfindungsgemäße Verfahren durch hohe Wirtschaftlichkeit auszeichnet. Beschichtungen und/oder Filme aus anderen Rohstoffen auf PP-Trägern wie z. B. ein TPEE-Film oder auch ein PEBA-Film jeweils auf einem PP-Vlies, bilden einen Verbund, der einem Verbund mit einer PU-Schicht unterlegen ist, nämlich vor allem zum Quellen und damit zum Ablösen der Beschichtung im Außeneinsatz neigt. Darüber hinaus sind diese Materialien auch teurer als PU, so daß sie keine wirtschaftliche Herstellung eines atmungsaktiven Verbundes zulassen.

Um die Haftung des PU-Produktes an dem PP-Vlies sehr wesentlich zu erhöhen, wird beim Herstellen des Verbundes zwischen dem PU-Produkt und dem PP-Vlies ein Haftvermittler verwendet (Anspruch 1) werden. Für die Anwendung eines Haftvermittlers, um jegliches Lösen der PU-Schicht von dem PP-Vlies zu vermeiden, gibt es, wie nachstehend noch deutlich wird, verschiedene Wege.

Erfindungsgemäß ist es möglich, daß der Haftvermittler mit dem PU vermischt und als PU-Produkt ein PU-Haftvermittler-Blend auf das PP-Vlies aufextrudiert wird (Anspruch 1). So wird eine für die gewünschte Haftung zwischen dem PU-Produkt und dem PP-Vlies geeignete Mischung zwischen dem PU-Material und dem Haftvermittler hergestellt, so daß das PU-Produkt bereits beim Extrudieren auf das PP-Vlies die gewünschten Bindungs- und Haftungseigenschaften aufweist.

Ein alternativer Weg zur Benutzung eines Haftvermittlers für eine Weiterbildung des erfindungsgemäßen Verfahrens besteht darin, daß das PP-Vlies mit dem Haftvermittler in der Schmelze ausgerüstet wird (Anspruch 1). Hierfür eignet sich als Haftvermittler ein Maleinsäureanhydrid-modifiziertes Polyolefin (insbesondere EXXELOR® VA 1801 der Firma Exxon). In diesem Fall steht nicht nur die Oberfläche des PP-Vlieses für eine Verbindung mit dem PU-Produkt zur Verfügung, sondern der Haftvermittler kann auch auf die Teile des PU-Produktes einwirken, die beim Verpressen der PU-Schicht mit dem PP-Vlies in die Vliesstruktur eindringen.

Es ist vorteilhaft, wenn das PU-Produkt unmittelbar in dem Bereich auf das PP-Vlies aufextrudiert wird, wo die PU-Schicht mit dem PP-Vlies verpreßt wird (Anspruch 2). Auf diese Weise wird das extrudierte PU besonders fest mit dem PP-Vlies verbunden.

Es ist auch zweckmäßig, wenn das PP-Vlies vorgewärmt wird (Anspruch 3) und damit die Voraussetzungen für die Verbindung zwischen dem vorzugsweise kalandrierten PP-Vlies und dem aufextrudierten PU noch weiter verbessert werden.

Es ist weiterhin vorteilhaft, wenn das PP-Vlies und das extrudierte PU-Produkt im Spalt von zwei Druckwalzen, insbesondere von einer Gießwalze und einem Presseur, fortlaufend miteinander verpreßt werden (Anspruch 4). Vor allem, wenn, wie oben bereits ausgeführt, das Aufextrudieren des PU-Produktes auf das PP-Vlies unmittelbar in dem Bereich der Verpressung der beiden Schichten stattfindet, ist es zweckmäßig, die Beschichtung des PP-Vlieses mit dem extrudierten PU-Produkt im Walzenspalt vorzunehmen, also unmittelbar, bevor das soeben mit dem extrudierten PU-Produkt beschichtete PP-Vlies von beiden Druckwalzen erfaßt wird.

Mindestens eine der beiden Druckwalzen soll beheizt sein (Anspruch 5), damit das Verpressen des PP-Vlieses mit dem aufextrudierten PU-Produkt ohne jegliche Absenkung der Temperatur, sondern unter Wärmeeinwirkung stattfindet.

Für die Herstellungsvariante des gemeinsamen Aufbringens eines PU-Produktes und eines Haftvermittlers kann z. B. ein Gemisch aus PU und Maleinsäureanhydrid-modifiziertem Polyolefin (z. B. EXXELOR® VA 1801 der Firma Exxon) aufgeschmolzen und in den Bereich extrudiert werden, wo die Verpressung zwischen dem PU-Produkt und dem PP-Vlies stattfindet (Anspruch 6). Dabei kann das PU-Produkt aus ca. 8o Gew.-% Polyurethan (insbesondere DESMOPAN® KU-2 8659 der Firma Bayer) und ca. 20 Gew.-% Maleinsäureanhydrid-modifiziertem Polyolefin (insbesondere EXXELOR® VA 1801 der Firma Exxon) bestehen (Anspruch 7). Auch hierbei ergibt sich zwischen dem PP-Vlies und der PU-Beschichtung eine hochfeste Verbindung, so daß sich beide Schichten nicht voneinander lösen lassen, ohne daß eine Trennung in der PP-Vliesebene stattfindet.

Unabhängig davon, welches Verfahren zum Aufbringen des PU-Produktes sowie evtl. auch eines Haftvermittlers gewählt wird, ist es vorteilhaft, wenn als PU DESMOPAN® KU-2 8659 der Firma Bayer verwendet wird (Anspruch 8).

Es ist möglich, das PU und auch das PP-Vlies mit Additiven wie z. B. Farben, Pigmenten, Stabilisatoren und Flammschutzmitteln auszurüsten.

Es ist auch möglich, den bahnförmigen, atmungsaktiven Verbund aus drei oder noch weiteren Schichten, vor allem als PU-Zwischenschicht mit PP-Vliesen an beiden Seiten der PU-Schicht herzustellen.

Weitere vorteilhafte Maßnahmen für die Herstellung einer festen Verbindung zwischen dem PP-Vlies und dem PU-Produkt bzw. der PU-Schicht bestehen in einer Vorbehandlung des PP-Vlieses durch Fluorieren, Corona, Plasma, CVD, PVD und/oder Benetzungshilfsmittel. Für die Anwendung von CVD eignen sich Monomere oder Oligomere auf Basis Acrylsäure, Acrylsäureester, Maleinsäureanhydrid und Vinylaccetat. Bei Anwendung von PVD eignen sich z. B. Metalloxide. Als Benetzungshilfsmittel kommen möglichst hoch molekulare Tenside zur Anwendung.

Eine Unterdeckbahn für Dächer und eine Fassadenbahn, mit der die oben angegebene Aufgabe der Erfindung gelöst wird, weist die Merkmalskombination des Anspruchs 9 auf.

Eine solche Unterdeckbahn ist wegen der PU-Schicht feststoff-, wind- und wasserundurchlässig, aber wasserdampfdurchlässig. Die guten Eigenschaften des PP-Vlieses als Träger der PU-Schicht verleihen dem erfindungsgemäßen Verbund alle gewünschten Eigenschaften einer Unterdeckbahn für Dächer, allerdings ohne hohe Kosten zu verursachen wie die bisher in Verbindung mit PU-Schichten für Unterdeckbahnen verwendeten anderweitigen Vliese. Im übrigen wird ausdrücklich auf die vorstehend im Zusammenhang mit der Darstellung und Erläuterung des erfindungsgemäßen Verfahrens genannten Merkmale und Vorteile hingewiesen. So ist es möglich, daß das PU und auch das PP-Vlies in dem erfindungsgemäßen Verbund mit Additiven wie z. B. Farben, Pigmenten, Stabilisatoren und Flammschutzmitteln ausgerüstet sind. Die Unterdeckbahn kann auch aus drei Schichten, nämlich aus einer PU-Zwischenschicht mit PP-Vliesen an beiden Seiten der PU-Schicht, bestehen.

Die Erfindung wird nachfolgend mit Bezug auf die Zeichnungen näher erläutert. In den Zeichnungen zeigen:
- Fig. 1: eine schematische Darstellung der Herstellung nach dem Stand der Technik eines bahnförmigen, atmungsak- tiven Verbundes aus einem mit einem Haftvermittler beschichteten PP-Vlies und einer PU-Schicht;
- Fig. 2: eine schematische Darstellung der erfindungsgemäßen Herstellung eines bahnförmigen, atmungsak- tiven Verbundes aus einem PP-Vlies und einer Schicht bestehend aus einem PU- Haftvermittler-Blend.

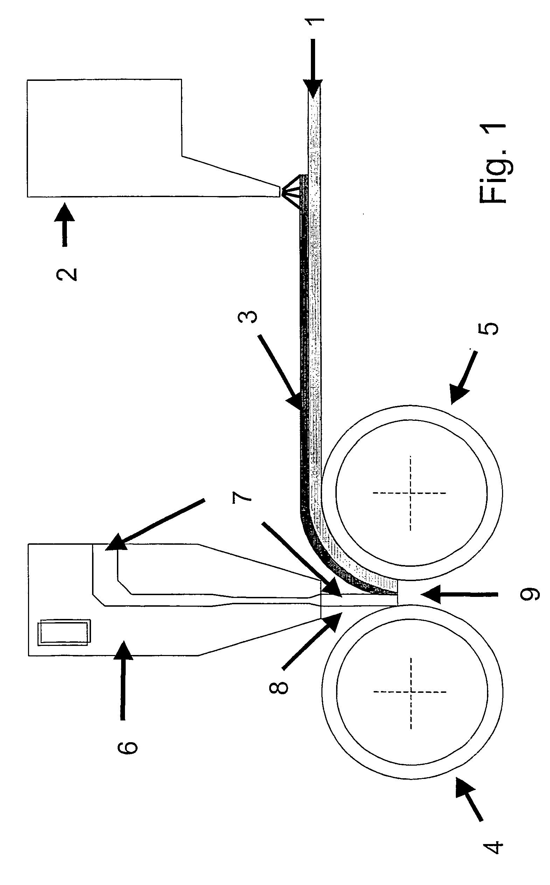

In dem ersten in Fig. 1 dargestellten Ausführungsform wird ein endloses, bahnförmiges sowie kalandriertes PP-Vlies 1 über einen Presseur 5 einem aus einer Gießwalze 4 und einem Presseur 5 bestehenden Walzenpaar zugeführt. Bevor das PP-Vlies 1 den Walzenspalt 8 erreicht, wird von einem Sprühkopf 2 ein Haftvermittler 3, vorzugsweise ein reaktiver Hotmelt auf PU-Basis vom Typ JOWATHERM® REAKTANT 601.88, in der schematisch in der Zeichnung dargestellten Weise auf die freiliegende Oberfläche des PP-Vlieses 1 aufgesprüht.

Aus einer Düse 6 wird ein aufgeschmolzenes PU-Produkt 7, vorzugsweise Polyurethan vom Typ DESMOPAN® KU-2 8659 von Firma Bayer, in den Walzenspalt 8 auf das mit dem Haftvermittler 3 versehene PP-Vlies 1 unmittelbar vor dem Bereich aufgesprüht, in dem das PP-Vlies 1 mit dem Haftvermittler 3 und dem PU-Produkt 7 fortlaufend zu einem festen Verbund 9 verpreßt wird.

In dieser Ausführungsform wird das PU-Prodult 7 mit einem Flächengewicht von 70 g/m² auf ein kalandriertes PP-Vlies 1 mit einem Flächengewicht von 70 g/m² extrudiert. Dabei beträgt das Flächengewicht des Haftvermittlers 3 des vorgenannten Typs 5 g/m². Je nach den Anforderungen an das Endprodukt sind Abweichungen von den vorgenannten Werten möglich.

Allgemein läßt sich sagen, daß - je nach Anforderungen des Bedarfsfalls - für die PU-Schicht Flächengewichte im Bereich von 10-150 g/m², jedoch auch im Bereich von 20-120 g/m², vor allem aber im Bereich von 30-100 g/m² in Betracht kommen. Mögliche Flächengewichte - ebenfalls je nach Anforderungen des Bedarfsfalles - für das PP-Vlies 1 liegen im Bereich von 20-300 g/m², eher noch im Bereich von 40-200 g/m² und vor allem im Bereich von 60-150 g/m². Für den Haftvermittler gelten entsprechende Bereiche der Flächengewichte, nämlich grundsätzlich 1-30 g/m², im allgemeinen jedoch im Bereich von 2-20 g/m² und vor allem im Bereich von 3-10 g/m².

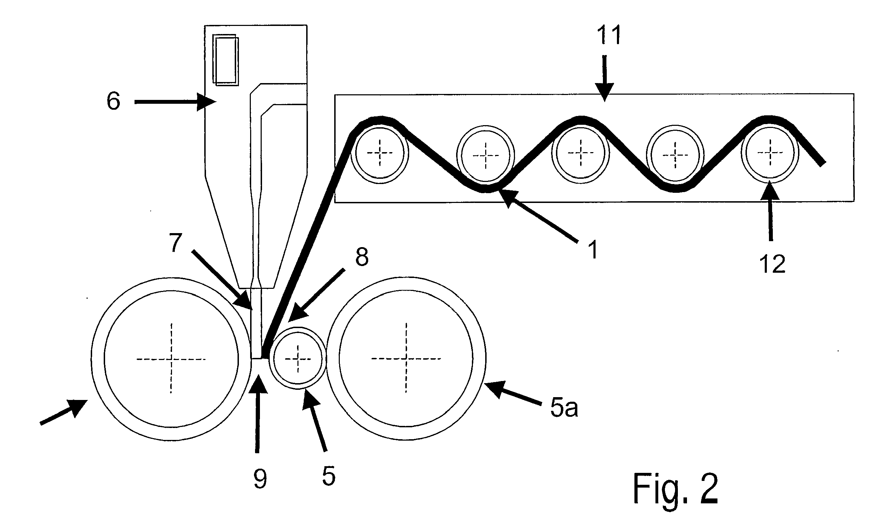

Der Gewichtsanteil des Haftvermittlers - bezogen auf das Ausführungsbeispiel gemäß Fig. 1 - liegt im Bereich von 2-20%, bevorzugt im Bereich 5-10%. Dabei kann der Anteil des Haftvermittlers im PU-Produkt 7 2-30 Gew.-%, vor allem 5-20 Gew.-%, betragen (Ausführungsbeispiel gemäß Fig. 2).

Es ist vorteilhaft, wenn der Haftvermittler 3 so nah wie möglich am Walzenspalt 8 aufgetragen wird, damit er nicht erkaltet, bevor das PU-Produkt 7 aufextrudiert und das PP-Vlies 1 mit dem PU-Produkt 7 zwischen der Gießwalze 4 und dem Presseur 5 verpreßt wird. Eine Schälprüfung nach einer Lagerung des Verbundes 9 24 Stunden nach dem Verpressen ergab eine Delamination in einer Ebene des PP-Vlieses 1.

In dem in Fig. 2 schematisch dargestellten erfindungsgemäßen Ausführungsbeispiel durchläuft das PP-Vlies 1 eine Vorheizung 11, die Heizwalzen 12 umfaßt, bevor das PP-Vlies 1 in den Walzenspalt 8 zwischen der Gießwalze 4 und dem in diesem Fall beheizten Presseur 5 eingezogen wird. Der Presseur 5 wird von einer Stützwalze 5a gestützt.

Aus der Düse 6 wird als PU-Produkt 7 ein PU-Haftvermittler-Blend, nämlich ein aufgeschmolzenes Gemisch aus PU und einem Haftvermittler, in den Walzenspalt 8 zwischen der Gießwalze 4 und dem Presseur 5 extrudiert, so daß das den Haftvermittler enthaltende PU-Product 7 zwischen der Gießwalze 4 und dem Presseur 5 zu einem festen Verbund 9 verpreßt wird, der die Walzen als endlose Bahn verläßt.

In einem bevorzugten Ausführungsbeispiel für diese Herstellungsart wird ein Gemisch aus 8o Gew.-% PU, nämlich vom Typ DESMOPAN® KU-2 8659 der Firma Bayer, und 20 Gew.-% Maleinsäureanhydrid-modifiziertem Polyolefin vom Typ EXXELOR® VA 1801 der Firma Exxon verwendet. Das Flächengewicht der aufextrudierten Schicht beträgt 70 g/m². Das kalandrierte PP-Vlies 1 hat ein Flächengewicht von 100 g/m² und wird in der Vorheizung 11 auf 110°C vorgewärmt. Eine Schälprüfung nach einer Lagerung des Verbundes 9, nach 24 Stunden ergab wie in dem ersten Ausführungsbeispiel eine Delamination in einer Ebene des PP-Vlieses 1.

In jedem Fall entsteht ein atmungsaktiver Verbund mit sd < 0,3 m mit hoher Robustheit und Wasserdichtigkeit (WS > 1,5 m), so daß sich der Verbund sehr gut für eine Verwendung als Unterdeckbahn eignet.

Wenn z. B. ein dreischichtiger Verbund hergestellt werden soll, führt man - mit Bezug auf die Ausführungsform gemäß Fig.1- zusätzlich ein mit einem Haftvermittler beschichtetes zweites Vlies über eine entsprechend angepaßte Walze an der Stelle der Gießwalze 4 zu, so daß beim Durchlauf durch das Walzenpaar die PU-Zwischenschicht und die beiden PP-Vliese zu einem festen Verbund verpreßt werden. Auch das erfindungsgemäße Ausführungsbeispiel gemäß Fig. 2 zum Herstellen eines bahnförmigen, atmungsaktiven Verbundes läßt sich für die Herstellung eines solchen dreischichtigen Verbundes anpassen, indem vor allem ein zweites PP-Vlies von links zugeführt wird. Weitere Varianten lassen sich ohne weiteres ausführen, z. B. auch das Hinzufügen weiterer Schichten, ohne daß hierauf im einzelnen eingegangen wird.

## Patentansprüche

1. Verfahren zum Herstellen eines bahnförmigen, atmungsaktiven Verbundes aus einem Vlies aus Kunststoff und einer ganz oder überwiegend aus PU bestehenden Schicht für den Einsatz als Unterdeckbahn für Dächer und als Fassadenbahn, bei dem
- ein produkt oder eine Schicht aus PU oder einem Stoffgemisch mit einem hohen Anteil PU auf Schmelztemperatur erwärmt und
- auf ein Vlies aus PP zur Bildung einer diffusionsofFcnen Beschichtung des Vlieses aufextrudiert sowie
- mit dem Vlies zu einem atmungsaktiven Verbund verpreßt wird, wobei
beim Herstellen des Verbundes zwischen dem Produkt bzw. der Schicht und dem Vlies ein Haftvermittler verwendet wird,
**dadurch gekennzeichnet, daß**
- der Haftvermittler mit dem PU vermischt und als Produkt ein PU-Haftvermittler-Blend auf das Vlies aufextrudiert wird oder daß das Vlies mit dem Haftvermittler in der Schmelze ausgerüstet wird.

2. Verfahren nach Anspruch 1, **dadurch gekennzeichnet, daß** das Produkt unmittelbar in dem Bereich auf das Vlies aufextrudiert wird, wo die Schicht mit dem Vlies verpreßt wird.

3. Verfahren nach Anspruch 1 oder 2, **dadurch gekennzeichnet, daß** das Vlies vorgewärmt wird.

4. Verfahren nach einem der Ansprüche 1-3, **dadurch gekennzeichnet, daß** das Vlies und das extrudierte Produkt im Spalt von zwei Druckwalzen, insbesondere von einer Gießwalze und einem Presseur, fortlaufend miteinander verpreßt werden.

5. Verfahren nach Anspruch 4, **dadurch gekennzeichnet, daß** mindestens eine der beiden Druckwalzen beheizt ist.

6. Verfahren nach Anspruch 1, **dadurch gekennzeichnet, daß** ein Gemisch aus PU und Maleinsäureanhydrid-modifiziertem Polyolefin aufgeschmolzen und in den Bereich extrudiert wird, wo die Verpressung zwischen dem ProduKt und dem Vlies stattfindet.

7. Verfahren nach Anspruch 6, **dadurch gekennzeichnet, daß** das Produkt aus ca. 80 Gew.-% PU, insbesondere DESMOPAN® KU-2 8659 der Firma Bayer, und ca. 20 Gew.-% Maleinsäureanhydrid-modifiziertem Polyolefin, insbesondere vom Typ EXXELOR® VA 1801 der Firma Exxon, verwendet wird.

8. Verfahren nach einem der Ansprüche 1-7, **dadurch gekennzeichnet, daß** als Produkt Polyurethan, insbesondere vom Typ DESMOPAN® KU-2 8659 der Firma Bayer, verwendet wird.

9. Unterdeckbahn für Dächer und Fassadenbahn, mit
- einem Vlies (1) aus PP und einer auf das Vlies (1) extrudierte Schicht (7) aus PU oder einem Stoffgemisch mit einem hohen PU-Anteil, die zu einem atmungsaktiven Verbund (9) als Bahnmaterial verpreßt sind, wobei
- der Verbund (9) aus der Schicht (7) und dem Vlies (1) einen Haftvermittler (3) aufweist,
**dadurch gekennzeichnet, daß**
- der Haftvermittler mit dem PU vermischt ist und das Gemisch aus dem PU und dem Haftvermittler auf das vlies auf-extrudiert ist oder das Vlies mit dem Haftvermittler in der Schmelze ausgerüstet ist.

10. Unterdeckbahn nach Anspruch 9, **dadurch gekennzeichnet, daß** sich das Gemisch der extrudierten Schicht (7) aus ca. 80 Ges.-% Polyurethan, insbesondere vom Typ DESMOPAN® KU-2 8659 der Firma Bayer, und ca. 20 Gew.-% Maleinsäureanhydrid-modifiziertem Polyolefin, insbesondere vom Typ EXXELOR® VA 1801 der Firma Exxon, besteht.

## Claims

1. Process for the production of an actively-breathing composite in the form of a web consisting of a nonwoven made of synthetic material and a layer consisting entirely or mainly of PU for utilization of an underlay for roofs and as a facade web, wherein
- a product or a layer consisting of PU or a mixture of materials having a high PU content is heated to melting temperature and
- is extruded onto a nonwoven consisting of PP in order to form a diffusion-permable coating of the nonwoven as well as
- pressed to the nonwoven to form an actively-breathing composite, wherein
a bonding agent between the product or layer and the nonwoven is used during the production of the composite,
**characterized in**
**that** the bonding agent is mixed with PU and a PU bonding agent blend is extruded onto the nonwoven as the product or that the nonwoven is provided with the bonding agent in the molten state.

2. Process according to claim 1, **characterized in that** the product is extruded onto the nonwoven immediately in the region where the layer is pressed to the nonwoven.

3. Process according to claim 1 or 2, **characterized in that** the nonwoven is preheated.

4. Process according anyone of the claims 1 to 3, **characterized in that** the nonwoven and the extruded product are pressed to one another continuously in the gap between two press rolls, in particular that of a casting roll and a pressing roll.

5. Process according to claim 4, **characterized in that** at least one of the two press rolls is heated.

6. Process according to claim 1, **characterized in that** a mixture of PU and maleic anhydride-modified polyolefin is melted and extruded into the region, in which pressing between the product and the nonwoven is performed.

7. Process according to claim 6, **characterized in that** the product consisting of approx. 80 wt. % PU in particular DESMOPAN® KU-2 8659 supplied by the company Bayer, and approx. 20 wt. % maleic anhydride-modified polyolefin, in particular EXXELOR® VA 1801 supplied by the company Exxon, is used.

8. Process according to anyone of the claims 1 to 7, **characterized in that** polyurethane, in particular of the type DESMOPAN® KU-2 8659 made by the company Bayer, is used as the product.

9. Underlay for roofs and facade web, comprising
- a nonwoven (1) made of PP and a layer (7) consisting of PU or a mixture of materials having a high PU content, extruded onto the nonwoven (1) are pressed together to form an actively-breathing composite (9) in the form of a web material, wherein
- the composite (9) comprising the layer (7) and the nonwoven (1) comprises a bonding agent (3),
**characterized in**
**that** the bonding agent and the PU are mixed and the PU bonding agent blend is extruded onto the nonwoven or that the nonwoven is provided with the bonding agent in the molten state.

10. Roof underlay according to claim 9, **characterized in that** the blend of the extruded layer (7) consits of approximately 80 wt. % polyurethane, in particular of the type DESMOPAN® KU-2 8659 supplied by the company Bayer and approximately 20 wt. % maleic anhydride-modified polyolefin, in particular of the type EXXELOR® VA 1801 supplied by the company Exxon.

## Revendications

1. Procédé pour la fabrication d'un composite en forme de bande, respirant, constitué par un non-tissé en matériau synthétique et une couche constituée totalement ou principalement de PU pour une utilisation comme lé de sous-couverture pour toitures et écran de façade, dans lequel
- un produit ou une couche en PU ou en un mélange de substances présentant une proportion élevée de PU est fondu(e) à la température de fusion et
- extrudé(e) sur un non-tissé en PP pour la formation d'un revêtement ouvert à la diffusion du non-tissé, ainsi que
- pressé(e) avec le non-tissé en un composite respirant, où
lors de la fabrication du composite, on utilise entre le produit ou la couche et le non-tissé un promoteur d'adhérence, **caractérisé en ce que** le promoteur d'adhérence est mélangé avec le PU et un mélange PU-promoteur d'adhérence est extrudé comme produit sur le non-tissé ou **en ce que** le non-tissé est apprêté avec le promoteur d'adhérence dans la masse fondue.

2. Procédé selon la revendication 1, **caractérisé en ce que** le produit est extrudé sur le non-tissé directement dans la zone où la couche est pressée avec le non-tissé.

3. Procédé selon la revendication 1 ou 2, **caractérisé en ce que** le non-tissé est préchauffé.

4. Procédé selon l'une quelconque des revendications 1-3, **caractérisé en ce que** le non-tissé et le produit extrudé sont pressés en continu l'un contre l'autre dans la fente entre deux cylindres de compression, en particulier un cycle de coulée et une presse.

5. Procédé selon la revendication 4, **caractérisé en ce qu'**au moins un des deux cylindres de compression est chauffé.

6. Procédé selon la revendication 1, **caractérisé en ce qu'**un mélange de PU et de polyoléfine modifiée par de l'anhydride de l'acide maléique est fondu et extrudé dans la zone où se produit le pressage entre le produit et le non-tissé.

7. Procédé selon la revendication 6, **caractérisé en ce que** le produit constitué par environ 80% en poids de PU, en particulier du DESMOPAN® KU-2 8659 de la société Bayer, et environ 20% en poids de polyoléfine modifiée par de l'anhydride de l'acide maléique, en particulier du type EXXELOR® VA 1801 de la société Exxon, est utilisé.

8. Procédé selon l'une quelconque des revendications 1-7, **caractérisé en ce qu'**on utilise comme produit du polyuréthane, en particulier du type DESMOPAN® KU-2 8659 de la société Bayer.

9. Lé de sous-couverture pour toitures et écran de façade, présentant
- un non-tissé (1) en PP et une couche (7) en PU ou en un mélange de substances présentant une proportion élevée de PU extrudée sur le non-tissé (1), qui sont pressés en un composite (9) respirant sous forme de matériau en bande, où
- le composite (9) constitué par la couche (7) et le non-tissé (1) présente un promoteur d'adhérence (3),
**caractérisé en ce que**
- le promoteur d'adhérence est mélangé avec le PU et le mélange de PU et de promoteur d'adhérence est extrudé sur le non-tissé ou le non-tissé est apprêté avec le promoteur d'adhérence en masse fondue.

10. Lé de sous-couverture selon la revendication 9, **caractérisé en ce que** le mélange de la couche (7) extrudée est constitué par environ 80% en poids de polyuréthane, en particulier du type DESMOPAN® KU-2 8659 de la société Bayer, et environ 20% en poids de polyoléfine modifiée par de l'anhydride de l'acide maléique, en particulier du type EXXELOR® VA 1801 de la société Exxon.
